# FASCICULE DE BREVET EUROPEEN

(11) **EP 2 263 820 B1**
(45) Date de publication et mention de la délivrance du brevet: **26.07.2017**
(21) Numéro de dépôt: 10354023.3
(22) Date de dépôt: 19.05.2010
(51) Int. Cl.: B23K 1/00, B23K 1/19, B23K 35/30

(54) **Procédé d'assemblage par brasage réactif et ampoule à vide assemblée selon ce procédé**
Hartlötverfahren mit einem reaktiven Lotmaterial, sowie dadurch hergestellter vakuumdichter Behälter
Brazing method using a reactive brazing alloy and vacuum-tight vessels obtained

(30) Priorité: 15.06.2009 FR 0902894
(43) Date de publication de la demande: 22.12.2010
(60) Demande divisionnaire: 11354039.7
(73) Titulaire: Schneider Electric Industries SAS, 92500 Rueil-Malmaison (FR)
(72) Inventeur: Devismes, Marie-Françoise, 38050 Grenoble Cedex 09 (FR); Mazzucchi, Dominique, 38050 Grenoble Cedex 09 (FR); Schellekens, Hans, 38050 Grenoble Cedex 09 (FR); Kozlova, Olga, 38050 Grenoble Cedex 09 (FR)
(74) Mandataire: Colette, Marie-Françoise

(56) Documents cités:
- EP-A2- 0 726 238
- US-A- 5 916 520

## Description

La présente invention concerne un procédé d'assemblage par brasage réactif d'un premier élément métallique avec un second élément comportant au moins en surface un oxyde ionocovalent à l'aide d'un alliage dit d'apport destiné à constituer un alliage de brasure liquide destiné à mouiller les deux surfaces respectivement métallique et en oxyde ionocovalent à assembler, des deux éléments précités, ledit alliage de brasure comportant du titane et ledit élément métallique comportant du nickel. Un tel procédé, dans lequel l'élément métallique est constitué d'acier SUS 304, est décrit dans le document US-A-5916520. La technique de brasage consiste de manière connue en soi à assembler deux matériaux à l'aide d'un métal ou d'un alliage dit « d'apport » dont le point de fusion est inférieur à celui des matériaux à assembler. Pour obtenir un joint étanche et fort, l'alliage de brasure liquide doit mouiller les deux surfaces à assembler. On caractérise la qualité du mouillage par l'angle de mouillage θ. Si θ < 40°, le mouillage est bon et une liaison intime entre les deux matériaux à assembler peut exister. Si θ > 55°, le mouillage est faible et, une liaison intime à l'échelle atomique ne réussira pas à se former en tout point de l'interface.

Les céramiques dont sont constituées les ampoules à vide sont des alumines Al2O3 qui sont des oxydes ionocovalents tels que l'oxyde de zirconium (ZrO2), l'oxyde de magnésium (MgO)... et ont une structure électronique très stable qui se prête peu, ou pas, à la formation de liaisons fortes à l'interface avec une phase métallique. Les angles de mouillage de ces céramiques par des brasures constituées d'alliages métalliques liquides non réactifs sont supérieurs à 90°, ce qui est significatif d'une mauvaise mouillabilité de ces céramiques par ces brasures.

Afin de réaliser l'assemblage de l'élément en céramique avec l'élément en métal par brasage, il est donc nécessaire soit de réaliser au préalable une métallisation de la surface à braser, soit d'utiliser des alliages de brasures réactifs. La réalisation préalable d'une métallisation de la surface à braser est le procédé le plus couramment utilisé et celui adopté pour les alumines des ampoules à vide. Il consiste le plus souvent à venir déposer sur l'alumine une première couche de quelques dizaines de microns de Moly-manganèse que l'on fritte à haute température (environ 1500°) sous hydrogène humide et sur laquelle on vient déposer une seconde couche de Nickel que l'on fritte à environ 950° C sous hydrogène. Cette opération de métallisation de l'alumine qui comprend donc deux opérations de dépôts et deux opérations de frittage est complexe et coûteuse.

La seconde méthode précitée consiste à utiliser des brasures contenant des éléments possédant une réactivité chimique vis-à-vis de l'alumine de façon à former des produits de réaction mouillables par la brasure. Les alliages réactifs développés pour réaliser le brasage entre les céramiques oxydes telles que l'alumine et des métaux sont principalement à base de AgCu et contiennent le plus souvent du titane comme élément réactif, mais il est également possible de trouver du vanadium, du zirconium ou du niobium. L'amélioration du mouillage de l'alumine par l'alliage de brasure est significative.

Cependant, dans le cas d'un brasage hétérogène entre l'alumine et un métal comme celui utilisé dans les ampoules à vide, l'utilisation des alliages de brasure réactifs peut présenter des inconvénients majeurs si la composition de la brasure est mal adaptée au métal à assembler.

En effet, si l'activité chimique de l'élément réactif de la brasure avec le métal est plus forte que l'activité chimique de l'élément réactif de la brasure avec l'alumine, il existe un risque de ne pas former une couche métallique continue sur l'alumine et donc de créer des zones de mauvaise mouillabilité. Ces zones de mauvaise mouillabilité sur la céramique sont autant de défauts visuels qui peuvent, dans le cas où une étanchéité de l'assemblage est requise, générer des défauts d'étanchéité. D'autre part, l'assemblage réalisé présente une tenue mécanique inférieure à celle d'un assemblage réalisé avec de l'alumine métallisée.

On en conclut donc que le brasage réactif ne peut pas s'adapter à tous les types d'assemblage et que dans certains cas, il est préférable d'utiliser le procédé de métallisation de l'alumine.

La présente invention résout ces problèmes et propose un procédé d'assemblage par brasage réactif permettant de s'adapter à des cas où le procédé par métallisation était préférable auparavant, de manière à obtenir pour ces cas particuliers, une bonne mouillabilité de l'alliage de brasure et une bonne tenue mécanique de l'assemblage.

A cet effet, la présente invention a pour objet un procédé d'assemblage selon la revendication 1. Selon une caractéristique particulière, l'épaisseur de la couche réactionnelle formée est supérieure à 3 µm.

Selon une autre caractéristique, l'oxyde ionocovalent précité est une céramique. Selon une autre caractéristique, la céramique précité est l'une des céramiques comprises dans le groupe comprenant l'alumine (Al203), l'oxyde de zirconium (Zr02), l'oxyde de magnésium (MgO).

Selon une autre caractéristique, l'alliage de brasage comporte du AgCuTi.

Selon une autre réalisation, l'élément métallique comporte du CuNi avec une concentration en poids de Ni comprise entre 20% et 50%, et la concentration en poids en titane est comprise entre 5 et 10 %.

Selon une autre caractéristique, le titane est apporté sous la forme d'un dépôt sur la surface contenant l'oxyde ionocovalent ou la surface métallique, de feuille déposée sur ladite surface ou sur le métal, ou de poudre ou de parcelle introduite dans l'alliage d'apport.

Selon une autre caractéristique, le pourcentage en poids de Ag est compris entre 60 et 71% et le pourcentage en poids de Cu est compris entre 26 et 36%. La présente invention a encore pour objet une ampoule à vide pour un interrupteur à vide comportant un corps cylindrique et deux capots d'extrémités, cette ampoule étant caractérisée en ce que l'un au moins des deux capots d'extrémité est assemblée au corps de l'ampoule par un procédé comportant les caractéristiques précédemment mentionnées prises seules ou en combinaison.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une représentation schématique illustrant l'assemblage d'un élément métallique et d'un élément en céramique au moyen d'une brasure réactive,
- La figure 2 est une représentation schématique, identique à la figure précédente, mais illustrant plusieurs réalisations particulières du procédé selon l'invention,
- La figure 3 est une représentation graphique illustrant en ordonnée, l'épaisseur de la couche réactionnelle en fonction du pourcentage en poids de Ti représenté en abcisse,
- La figure 4 est une vue en coupe axiale d'une ampoule à vide comportant deux capots d'extrémité fixés par le procédé selon l'invention, à la partie cylindrique de l'ampoule,
- La figure 5 est une représentation graphique illustrant en ordonnée, la probabilité de rupture et en abscisse, la force à rupture F (N) pour deux compositions de brasure AgCuTi (72%Ag,28%Cu) à 3 et 5 % en poids de Ti.

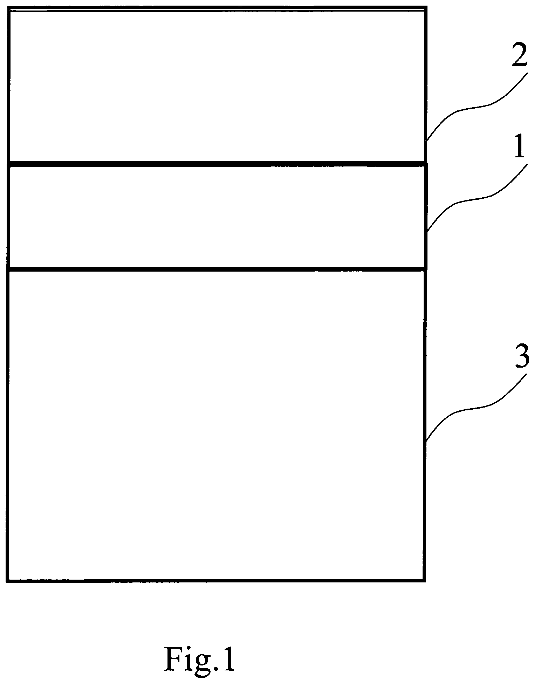

Sur la figure 1, on voit un schéma représentant une brasure réactive 1 réalisée entre un élément métallique 2 et un élément en céramique 3.

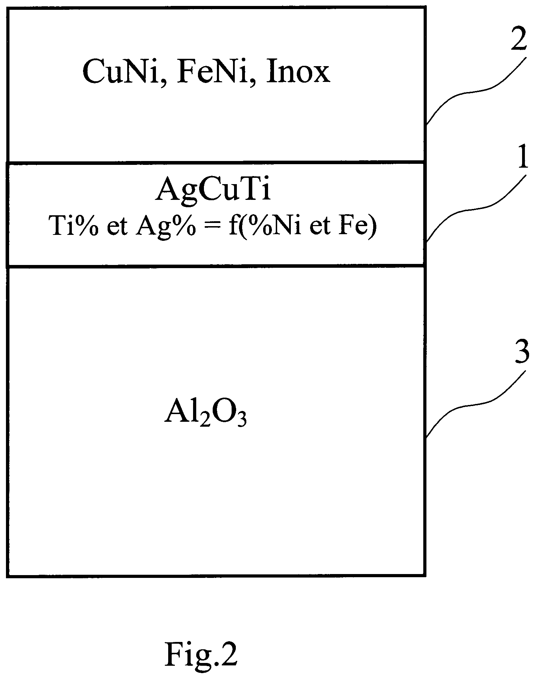

Sur la figure 2, ont été indiquées plusieurs réalisations particulières du procédé selon l'invention dans lesquels l'élément métallique 2 est soit du CuNi, soit du FeNi, soit de l'acier inoxydable. L'alliage de brasure 1 est du AgCuTi, avec un pourcentage en Ti étant fonction du pourcentage en Ni et du pourcentage en Fe et un pourcentage en Ag étant fonction du pourcentage en Ni et du pourcentage en Fe. L'oxyde ionocovalent 3 est une céramique constituée par de l'alumine Al2O3.

Selon l'invention, le procédé consiste à réaliser une brasure réactive entre un élément métallique contenant du Nickel et un élément contenant en surface un oxyde ionocovalent, au moyen d'une brasure réactive contenant du titane, et à régler le taux en poids du titane de manière à former sur l'élément comprenant un oxyde ionocovalent, une couche réactionnelle e suffisamment épaisse et stable de manière à minimiser les zones de non mouillabilité sur l'oxyde ionocovalent. Ce taux de titane est également réglé de manière à maintenir le taux de composés intermétalliques formés en dessous d'une certaine valeur, ce taux de composés intermétalliques ayant une influence sur la résistance mécanique de la brasure formée.

Selon une réalisation particulière de l'invention, l'élément métallique est du CuNi avec Ni (pds) en poids compris entre 20% et 50% et la teneur en titane est supérieure à 5 % et inférieure à 10 % (pds).

Selon une réalisation particulière, l'alliage de brasure est du AgCuTi et l'oxyde ionocovalent est de l'alumine.

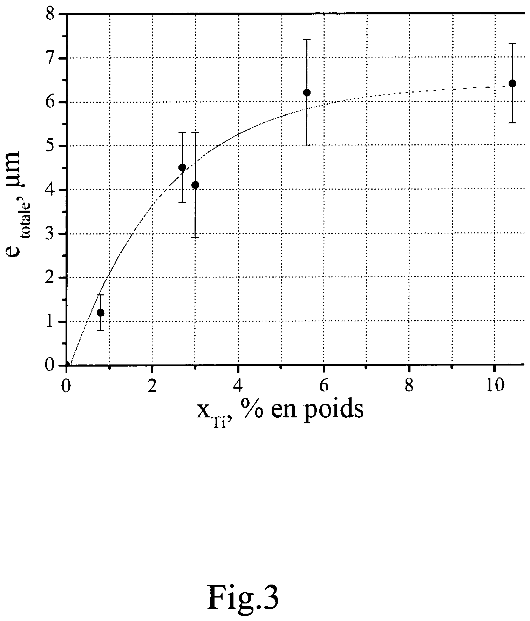

Sur la figure 3, on voit une représentation graphique illustrant l'épaisseur e de la couche réactionnelle formée en µm en fonction du taux de titane (X Ti % en poids) présent dans l'alliage pour un assemblage entre l'oxyde ionocovalent et un métal exempt d'élément présentant une activité chimique avec l'élément réactif de la brasure ici par exemple entre l'alumine (Al2O3) et le cuivre (Cu).

On voit ainsi que pour un pourcentage en poids de Ti compris entre 2 et 5 %, l'épaisseur de la couche réactionnelle obtenue sera comprise entre 3 et 6 µm. De même, pour un pourcentage en Ti compris entre environ 5 et 10 % en poids, l'épaisseur de la couche réactionnelle sera comprise entre 5 et 7 µm.

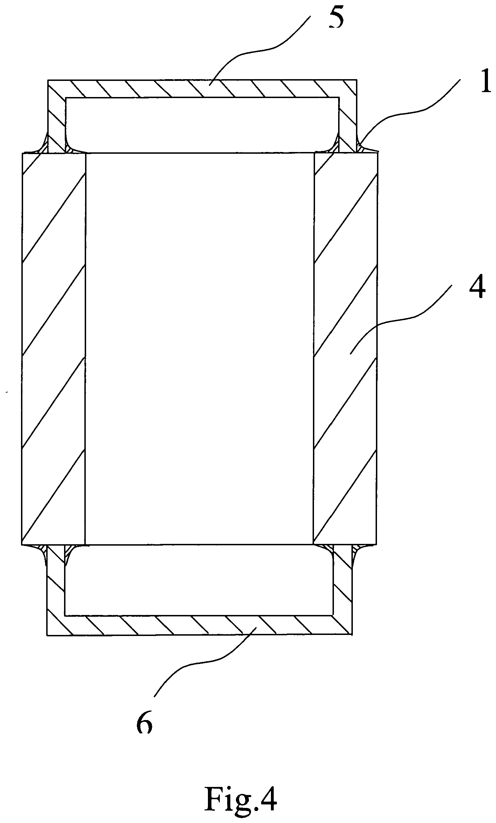

Cette épaisseur dépend du taux de nickel ou d'élément présentant une activité chimique avec l'élément réactif de la brasure contenu dans l'élément métallique. Sur la figure 4, a été représentée une ampoule à vide A comportant un corps cylindrique 4 réalisé en céramique sur lequel on été fixés par brasage réactif deux capots d'extrémité 5,6.

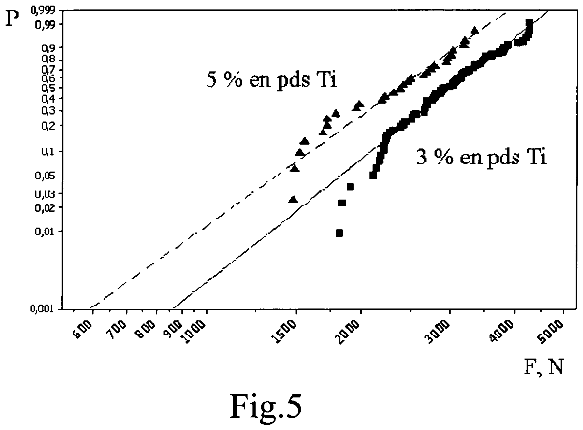

Sur la figure 5, on voit que la probabilité de rupture au niveau de la brasure dépend du pourcentage en poids de titane présent dans le matériau de la brasure. Ainsi, pour un pourcentage en poids de titane de 5 %, la probabilité de rupture sera supérieure à celle associée à un pourcentage en poids de Ti de 3 %. On a donc réalisé grâce à l'invention, un procédé d'assemblage par brasage réactif d'un oxyde ionocovalent avec un métal sans passer par une étape préliminaire de métallisation qui est coûteuse, ce procédé pouvant être utilisé même dans des cas où le métal à assembler réagit beaucoup avec l'élément actif de la brasure.

L'invention s'applique à tout type d'assemblage qui requiert une bonne étanchéité tout au long de la durée de vie des éléments à assembler, et/ou une tenue mécanique améliorée tel que l'assemblage des capots d'extrémité d'une ampoule à vide à la partie cylindrique de l'ampoule.

L'invention s'applique à l'assemblage de tout matériau constitué par un oxyde ionocovalent avec un métal contenant du Titane dés lors qu'une liaison Ti-O est possible.

L'oxyde ionocovalent peut par exemple consister en une céramique telle l'alumine, l'oxyde de zirconium, l'oxyde de magnésium etc...

## Revendications

1. Procédé d'assemblage par brasage réactif d'un premier élément métallique avec un second élément comportant au moins en surface un oxyde ionocovalent à l'aide d'un alliage dit d'apport destiné à constituer un alliage de brasure liquide destiné à mouiller les deux surfaces respectivement métallique et en oxyde ionocovalent des deux éléments précités, ledit alliage de brasure comportant du titane et ledit élément métallique comportant du nickel,
**caractérisé en ce que** le métal à assembler possède un taux en éléments d'alliage pouvant former des intermétalliques avec le Ti compris entre 20% et 50%, et **en ce que** le taux de titane dans l'alliage de brasure est compris entre 5 et 10% de manière à minimiser les zones de non mouillabilité sur la surface du second élément réalisé en un oxyde ionocovalent en formant à l'interface dudit élément une couche réactionnelle suffisamment épaisse et stable, et à minimiser la formation de composés intermétalliques dans le joint brasé.

2. Procédé d'assemblage selon la revendication 1, **caractérisé en ce que** l'épaisseur de la couche réactionnelle (e) formée est supérieure à 3 µm.

3. Procédé d'assemblage selon la revendication 1 ou 2, **caractérisé en ce que** l'oxyde ionocovalent précité est une céramique.

4. Procédé d'assemblage selon la revendication 3, **caractérisé en ce que** la céramique précité est l'une des céramiques comprises dans le groupe comprenant l'alumine (Al2O3), l'oxyde de zirconium (Zr02), l'oxyde de magnésium (MgO).

5. Procédé d'assemblage selon l'une quelconque des revendications précédentes, **caractérisé en ce que** l'alliage de brasage comporte du AgCuTi.

6. Procédé d'assemblage selon l'une quelconque des revendications 1 à 5, **caractérisé en ce que** l'élément métallique comporte du CuNi avec une concentration en poids de Ni comprise entre 20% et 50%.

7. Procédé d'assemblage selon l'une quelconque des revendications précédentes, **caractérisé en ce que** le titane est apporté sous la forme d'un dépôt sur la surface contenant l'oxyde ionocovalent ou la surface métallique, de feuille déposée sur ladite surface ou sur le métal, ou de poudre ou de parcelle introduite dans l'alliage d'apport.

8. Procédé d'assemblage selon l'une quelconque des revendications 5 à 11, **caractérisé en ce que** le pourcentage en poids de Ag est compris entre 60 et 71% et le pourcentage en poids de Cu est compris entre 26 et 36%.

9. Ampoule à vide pour un interrupteur à vide comportant un corps cylindrique (4) et deux capots d'extrémités (5,6), **caractérisé en ce que** l'un au moins des deux capots d'extrémité (5,6) est assemblé au corps (4) de l'ampoule A par un procédé selon l'une quelconque des revendications précédentes.

## Patentansprüche

1. Verfahren zur Verbindung durch Hartlöten eines ersten metallischen Elements mit einem zweiten Element, umfassend ein ionokovalentes Oxid mindestens an der Oberfläche, mit Hilfe einer als Füllung bezeichneten Legierung, die dazu bestimmt ist, eine flüssige Lötlegierung zu bilden, welche dazu bestimmt ist, die beiden Flächen, die jeweils aus Metall und aus ionokovalentem Oxid bestehen, der beiden vorgenannten Elemente zu benetzen, wobei die Lötlegierung Titan umfasst, und das metallische Element Nickel umfasst,
**dadurch gekennzeichnet, dass** das zu verbindende Metall einen Gehalt an Legierungselementen, die intermetallische Verbindungen mit dem Titan bilden können, zwischen 20 % und 50 % besitzt, und dass der Gehalt an Titan in der Lötlegierung zwischen 5 und 10 % liegt, um die nicht benetzbaren Zonen auf der Fläche des zweiten Elements, das aus einem ionokovalenten Oxid besteht, zu minimieren, indem an der Grenzfläche des Elements eine ausreichend dicke und stabile Reaktionsschicht gebildet wird, und um die Bildung von intermetallischen Verbindungen in der Lötstelle zu minimieren.

2. Verbindungsverfahren nach Anspruch 1, **dadurch gekennzeichnet, dass** die Dicke der gebildeten Reaktionsschicht (e) mehr als 3 µm beträgt.

3. Verbindungsverfahren nach Anspruch 1 oder 2, **dadurch gekennzeichnet, dass** das ionokovalente Oxid eine Keramik ist.

4. Verbindungsverfahren nach Anspruch 3, **dadurch gekennzeichnet, dass** die Keramik eine der Keramiken ist, die zur Gruppe umfassend Aluminium (Al2CO3), Zirkoniumoxid (Zr02), Magnesiumoxid (MgO) gehören.

5. Verbindungsverfahren nach einem der vorhergehenden Ansprüche, **dadurch gekennzeichnet, dass** die Lötlegierung AgCuTi umfasst.

6. Verbindungsverfahren nach einem der Ansprüche 1 bis 5, **dadurch gekennzeichnet, dass** das metallische Element CuNi mit einer Gewichtskonzentration von Ni zwischen 20 % und 50 % umfasst.

7. Verbindungsverfahren nach einem der vorhergehenden Ansprüche, **dadurch gekennzeichnet, dass** das Titan in der Form eines Depots auf der Fläche, die das ionokovalente Oxid enthält, oder auf der metallischen Fläche, einer auf der genannten Fläche oder auf dem Metall aufgebrachten Folie oder eines Pulvers oder Partikels, das in die Fülllegierung eingeführt wird, eingebracht wird.

8. Verbindungsverfahren nach einem der Ansprüche 5 bis 11, **dadurch gekennzeichnet, dass** der Gewichtsprozentsatz von Ag zwischen 60 und 71 % liegt, und der Gewichtsprozentsatz von Cu zwischen 26 und 36 % liegt.

9. Vakuumröhre für einen Vakuumunterbrecher, umfassend einen zylindrischen Körper (4) und zwei Endkappen (5, 6), **dadurch gekennzeichnet, dass** mindestens eine der Endkappen (5, 6) mit dem Körper (4) der Röhre A durch ein Verfahren nach einem der vorhergehenden Ansprüche verbunden wird.

## Claims

1. Process for joining by reactive brazing a first metal element to a second element including at least on its surface an ionocovalent oxide using what is called a filler alloy intended to form a liquid brazing alloy intended to wet the two, metal and ionocovalent oxide, respectively, surfaces of the two aforementioned elements, said brazing alloy including titanium and said metal element including nickel,
**characterised in that** the metal to be joined possesses a content of alloy elements able to form intermetallics with Ti comprised between 20% and 50%, and **in that** the titanium content in the brazing alloy is comprised between 5 and 10% so as to minimise zones of non-wettability on the surface of the second element made of an ionocovalent oxide by forming at the interface of said element a sufficiently thick and stable reactional layer, and to minimise the formation of intermetallic compounds in the brazed joint.

2. Joining process according to Claim 1, **characterised in that** the thickness (e) of the formed reactional layer is larger than 3 µm.

3. Joining process according to Claim 1 or 2, **characterised in that** the aforementioned ionocovalent oxide is a ceramic.

4. Joining process according to Claim 3, **characterised in that** the aforementioned ceramic is one of the ceramics comprised in the group comprising alumina (Al₂O₃), zirconium oxide (ZrO₂), magnesium oxide (MgO).

5. Joining process according to any one of the preceding claims, **characterised in that** the brazing alloy includes AgCuTi.

6. Joining process according to any one of Claims 1 to 5, **characterised in that** the metal element includes CuNi with a concentration by weight of Ni comprised between 20% and 50%.

7. Joining process according to any one of the preceding claims, **characterised in that** the titanium is provided in the form of a deposit on the surface containing the ionocovalent oxide or the metal surface, of a sheet deposited on said surface or on the metal, or of a powder or parcel introduced into the filler alloy.

8. Joining process according to any one of Claims 5 to 11, **characterised in that** the percentage by weight of Ag is comprised between 60 and 71% and the percentage by weight of Cu is comprised between 26 and 36%.

9. Vacuum vessel for vacuum switch including a cylindrical body (4) and two end covers (5, 6), **characterised in that** at least one of the two end covers (5, 6) is joined to the body (4) of the vessel A using a process according to any one of the preceding claims.
